(19) Europäisches Patentamt
European Patent Office
Office européen des brevets

(11) **EP 3 084 511 B1**

(12) **FASCICULE DE BREVET EUROPEEN**

(45) Date de publication et mention
de la délivrance du brevet:
**01.09.2021 Bulletin 2021/35**

(21) Numéro de dépôt: **14828181.9**

(22) Date de dépôt: **18.12.2014**

(51) Int Cl.:
***G02B 27/01*** *(2006.01)*

(86) Numéro de dépôt international:
**PCT/FR2014/000287**

(87) Numéro de publication internationale:
**WO 2015/092164 (25.06.2015 Gazette 2015/25)**

(54) **SYSTÈME ET PROCÉDÉ DE COMMANDE DE LUMINOSITÉ D'UN AFFICHEUR TÊTE HAUTE ET AFFICHEUR UTILISANT LEDIT SYSTÈME**

SYSTEM UND VERFAHREN ZUR STEUERUNG DER HELLIGKEIT EINES HEADUP-DISPLAYS UND ANZEIGE MIT VERWENDUNG DES BESAGTEN SYSTEMS

SYSTEM AND METHOD FOR CONTROLLING THE LUMINOSITY OF A HEAD-UP DISPLAY AND DISPLAY USING SAID SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1303044**

(43) Date de publication de la demande:
**26.10.2016 Bulletin 2016/43**

(73) Titulaire: **Valeo Comfort and Driving Assistance 94046 Créteil Cedex (FR)**

(72) Inventeur: **IRZYK, Michael 94046 Créteil Cedex (FR)**

(56) Documents cités:
**EP-A1- 2 093 603      WO-A1-2011/075028
WO-A2-2011/015843   US-A- 3 816 005
US-A1- 2012 092 315**

**Description**

**1. Domaine technique de l'invention**

L'invention concerne un système de commande de luminosité d'un afficheur tête haute.

**2. Arrière-plan technologique**

L'invention trouvera ses applications, par exemple, dans les véhicules automobiles pour informer les utilisateurs du véhicule, en particulier son conducteur.

Il est connu d'équiper un véhicule automobile avec un système d'affichage, dit tête haute. Un tel système est placé dans le champ de vision du conducteur automobile et affiche une information relative à l'état du véhicule automobile, du trafic ou autre.

Afin de ne pas perturber la conduite, il est nécessaire que la luminosité de l'image projetée soit adaptée à la luminosité ambiante. Il est en particulier nécessaire que la puissance optique de l'image projetée soit fortement différente lors d'un trajet diurne et d'un trajet nocturne ou lors d'un passage dans un tunnel. Ainsi, la luminosité de l'image projetée doit être à la fois visible en toute circonstance et non gênante, dans les deux cas notamment pour des raisons de sécurité. De plus, compte tenu de la dynamique de luminosité importante nécessaire au respect de ces contraintes, la gestion de la luminosité ne peut être faite uniquement par le conducteur et doit donc être automatisée, s'adaptant à la situation dans laquelle se trouve le véhicule.

Ainsi, il a été proposé de détecter la luminosité ambiante à l'aide d'un capteur de luminosité installé sur le véhicule. Cette mesure de luminosité est ensuite utilisée pour adapter la luminosité de l'afficheur. Un tel système est par exemple présenté dans la demande de brevet KR20120123833. Néanmoins, cette solution n'est pas satisfaisante en terme de sécurité puisque l'information relevée par le capteur est imprécise, et peut être aisément erronée en cas de perturbations extérieures (phares d'un véhicule croisé, luminaire de ville, etc.). Le document US2012/092315 A1 décrit un système de commande de luminosité d'un afficheur tête haute pour véhicule, afin d'optimiser le contraste entre l'image projetée et l'environnement situé derrière la dite image.

**3. Objectifs de l'invention**

L'invention vise à pallier au moins certains des inconvénients des systèmes de commande de luminosité d'afficheur tête haute connus.

En particulier, l'invention vise aussi à fournir, dans au moins un mode de réalisation de l'invention, un système de commande de luminosité d'afficheur tête haute améliorant la sécurité du conducteur du véhicule.

L'invention vise aussi à fournir, dans au moins un mode de réalisation de l'invention, un système de commande de luminosité d'afficheur tête haute améliorant le confort du conducteur du véhicule.

**4. Exposé de l'invention**

Pour ce faire, l'invention concerne un afficheur tête haute d'un véhicule comprenant un système de commande de luminosité tel que défini dans la revendication 1.

Un système selon l'invention permet donc d'anticiper les changements de luminosité qui sont fréquents dans un véhicule en mouvement. Ces changements de luminosité doivent être pris en compte le plus tôt possible par le système, pour que la consigne de luminosité transmise à l'affichage soit adaptée à la situation à venir, plutôt qu'à la situation présente car cela engendre une modification tardive de la consigne. Les moyens d'évaluation de la luminosité détectent la luminosité à l'avant du véhicule et au-delà de l'image affichée sur l'afficheur afin de permettre aux moyens de détermination de déterminer à l'avance la consigne de luminosité, et l'appliquer au moment du changement de luminosité au niveau de l'afficheur.

Par exemple, pendant une conduite de nuit, les moyens d'évaluation détectent la luminosité correspondant à un tunnel éclairé à l'avant du véhicule et au-delà de l'image affichée sur l'afficheur, et le système de commande de luminosité transmet à l'afficheur une consigne de luminosité adaptée au tunnel éclairé (dans ce cas, une valeur de luminosité plus forte que pour la conduite nocturne), et l'applique dès l'entrée du véhicule dans le tunnel éclairé. L'invention concerne également un procédé de commande de luminosité tel que défini dans la revendication 8. Des modes de réalisation additionnels sont définis dans les revendications dépendantes.

Avantageusement et selon le mode principal les moyens d'évaluation de la luminosité comprennent au moins un capteur de luminosité.

Selon cet aspect de l'invention, la luminosité est directement mesurée notamment par un ou plusieurs capteurs de luminosité.

Avantageusement et selon ce dernier aspect de l'invention, les moyens d'évaluation de la luminosité comprennent un capteur de luminosité extérieure apte à évaluer la luminosité vers l'avant du véhicule et au-delà de l'image affichée sur l'afficheur, ledit capteur étant disposé de sorte à être dans le même charrip de vision que l'afficheur.

Selon cet aspect de l'invention, un capteur est directement dirigé vers l'extérieur du véhicule de façon à capter la luminosité dans le champ de vision du conducteur au-delà de l'afficheur, pour pouvoir adapter la luminosité de l'afficheur à la luminosité extérieure au-delà de l'afficheur.

Avantageusement et selon ce dernier aspect de l'invention, le capteur de luminosité extérieure est disposé de sorte à recevoir la lumière incidente dans un cône dont l'intersection avec le plan de l'image recouvre sensiblement toute cette image. De préférence, ce cône a un angle d'environ 10°.

Avantageusement et selon un mode de réalisation additionnel, les moyens d'évaluation de la luminosité comprennent au moins :

- le capteur de luminosité extérieure, mesurant la luminosité à l'extérieur du véhicule,
- un capteur de luminosité mesurant la luminosité à l'intérieur du véhicule,
- un capteur de luminosité mesurant la luminosité de l'afficheur.

Selon cet aspect de l'invention, ces trois luminosités sont utilisées pour la détermination de la consigne de luminosité : le capteur de luminosité de l'afficheur détermine la luminosité actuelle de l'afficheur, le capteur de luminosité à l'intérieur du véhicule permet de mesurer la luminosité ambiante actuelle au niveau du conducteur, le capteur de luminosité à l'extérieur du véhicule permet de mesurer par anticipation la luminosité à laquelle va être soumise le véhicule.

Avantageusement et selon un autre mode de réalisation additionnel, les moyens d'évaluation de la luminosité sont reliés à des moyens fournissant l'un ou plusieurs des types de données suivantes :

- absence/présence de pluie,
- géo-localisation,
- horaire,
- conditions météorologiques,
- images vidéo,
- vitesse du véhicule.

Selon cet aspect de l'invention, la luminosité est évaluée en fonction des données fournies par une multitude de systèmes de mesure ou de captage de données. Ces données influent sur l'évaluation de la luminosité et sur la détermination de la consigne de luminosité transmise à l'afficheur. Notamment, l'absence/présence de pluie, les conditions météorologiques et l'horaire influent sur la luminosité extérieure. La géo-localisation permet notamment de prévoir la présence de tunnels et d'éclairages citadins. Les images vidéo donnent notamment des informations sur la luminosité en plusieurs points du champ de vision du conducteur, sur l'état du trafic, etc. Enfin, la vitesse du véhicule permet notamment d'évaluer le temps séparant le véhicule du changement de situation anticipé.

Avantageusement et selon un autre mode de réalisation additionnel, le système comprend une base de données de scène d'illumination, ladite base comprenant des données représentatives de différentes situations d'illumination. Avantageusement, le système peut alimenter par apprentissage ladite base de données.

Selon cet aspect de l'invention, les moyens de détermination de la luminosité peuvent corréler les données relevées avec des situations d'illumination connues, afin d'en déduire une consigne de luminosité adaptée. Le système peut aussi apprendre des situations existantes pour affiner les données de sa base de données.

Avantageusement et selon un autre mode de réalisation additionnel, le système comprend un moyen de réglage manuel de la luminosité apte à être contrôlé par le conducteur du véhicule, et configuré pour permettre un réglage fin par un conducteur de la consigne de luminosité transmise à l'afficheur autour de la valeur de consigne de luminosité initiale transmise par les moyens de détermination.

Selon cet aspect de l'invention, à la détermination automatique de la consigne de luminosité s'ajoute un réglage manuel par le conducteur, permettant de faire varier le point de confort du conducteur, c'est-à-dire une luminosité qui correspond davantage à la réponse optique/visuelle propre à chaque conducteur. Ce réglage est un réglage fin, c'est-à-dire qu'il s'écarte seulement de façon légère de la consigne déterminée automatiquement. Autrement dit, la consigne de luminosité L transmise à l'afficheur se présente sous la forme :

$$ L = L_{auto} + \Delta l $$

avec $L_{auto}$ la luminosité déterminée automatiquement par le moyen de détermination, et $\Delta l$ la valeur du réglage fin du conducteur. La valeur de réglage fin $\Delta l$ peut avantageusement être proportionnelle à $L_{auto}$.

Avantageusement et selon un autre mode de réalisation additionnel, le moyen de réglage manuel comprend un interrupteur configuré pour, à la suite de l'activation de celui-ci par le conducteur, réduire significativement la valeur de consigne de luminosité et/ou pour réduire le nombre d'informations affichées sur l'image de l'afficheur et, à la suite de la désactivation de celui-ci, rétablir la valeur de consigne de luminosité initiale et le nombre d'informations affichées sur l'image de l'afficheur initial.

Selon cet aspect de l'invention, l'interrupteur permet au conducteur d'utiliser un mode de présence discrète de l'image affichée par l'afficheur, afin de réduire l'importance de celle-ci dans le champ de vision du conducteur, à la fois en termes de luminosité et en termes du nombre d'information affichées.

## 5. Description des figures

D'autres buts, caractéristiques et avantages de l'invention apparaîtront à la lecture de la description suivante donnée à titre uniquement non limitatif et qui se réfère aux figures annexées dans lesquelles :

- La figure 1 est une vue schématique de l'intérieur d'un véhicule équipé d'un système de commande et d'un afficheur selon l'invention,
- La figure 2 est une représentation schématique du système de commande selon l'invention.

**6. Description détaillée d'un mode de réalisation de l'invention**

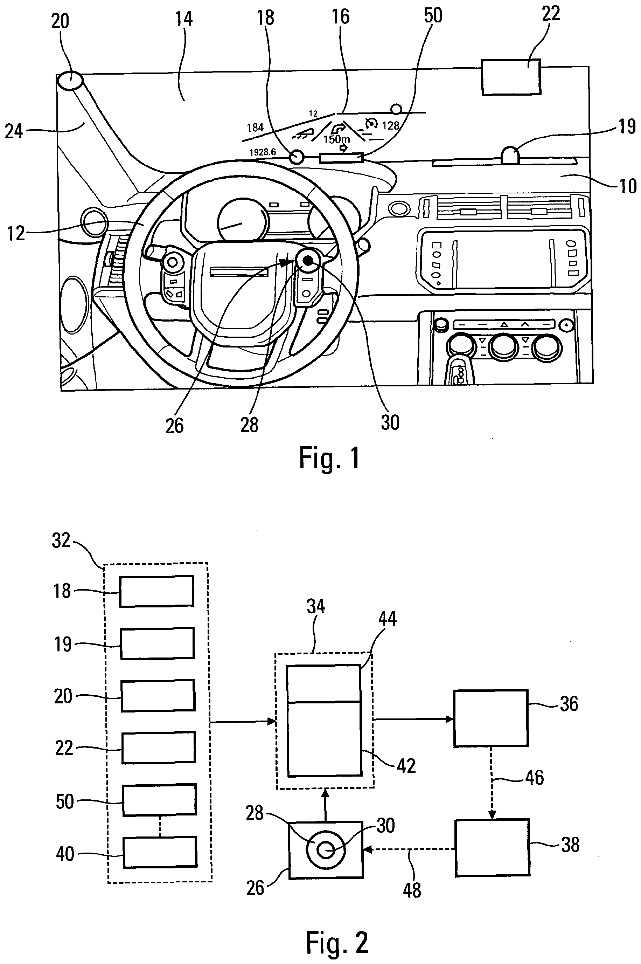

La figure 1 représente de façon schématique une vue de l'intérieur d'un véhicule équipé d'un système de commande et d'un afficheur selon l'invention. La vue intérieure représentée montre une partie du champ de vision d'un conducteur du véhicule, notamment une partie d'un habitacle du véhicule, un tableau de bord 10, un volant de direction 12 et un pare-brise 14. Par réflexion sur le pare-brise 14 est affiché, grâce à un afficheur selon l'invention de type afficheur tête haute, une image 16, comprenant par exemple la vitesse du véhicule, des informations de guidage GPS et d'autres informations jugées utiles par le constructeur du véhicule et/ou le conducteur. L'image 16 est une image virtuelle formée par un système optique comme par exemple une lame semi-réfléchissante. Dans ce mode de réalisation, l'image 16 est directement formée sur le pare-brise 14, mais l'afficheur peut aussi comprendre de façon connue une lame semi-réfléchissante placée entre le pare-brise 14 et le conducteur, dans son champ de vision, sur lequel est formée l'image 16.

L'afficheur selon l'invention comprend un système de commande de luminosité selon l'invention, décrit plus en détail par la suite en référence à la figure 2. Le système de commande comprend notamment des moyens d'évaluation de la luminosité. Sur la figure 1 sont représentés parmi les moyens d'évaluation de la luminosité et à titre d'exemple un premier capteur de luminosité extérieure 18, un deuxième capteur de luminosité extérieure 19, un capteur de luminosité intérieure 20 et une caméra 22. L'afficheur comprend aussi un capteur 50 de la luminosité de l'image 16 affichée.

Le capteur de luminosité intérieure 20 mesure la lumière dans le véhicule, à proximité du conducteur. Il est avantageusement situé sur un pourtour 24 du pare-brise 14 et est dirigé vers le conducteur. Ce capteur de luminosité intérieure 20 peut faire partie d'un ensemble de surveillance (connu sous le nom anglais de *monitoring*) du conducteur, comprenant par exemple une caméra intérieure.

Le premier capteur de luminosité extérieure 18 a pour fonction de permettre l'évaluation de la luminosité vers l'avant du véhicule, au-delà de l'image 16 affichée sur l'afficheur tête haute. Il comporte par exemple une diode photo-détectrice et un système optique, disposés de sorte à être dans le même champ de vision que l'afficheur et par exemple permettre de recevoir la lumière incidente dans un cône d'angle par exemple d'environ 10°, dont l'intersection avec le plan de l'image 16 recouvre sensiblement toute cette image. Ce capteur 18 peut également être une caméra, susceptible le cas échéant d'être utilisé pour d'autres fonctions (détection de piétons, de véhicules, ...).

Le deuxième capteur de luminosité extérieure 19 est avantageusement disposé sur le tableau de bord 10 du véhicule et dirigé vers l'extérieur, par exemple vers le haut. Ce capteur de luminosité extérieure 19 peut, par exemple, se présenter sous la forme d'une diode photo-détectrice placée sous un dôme translucide, permettant ainsi de mesurer une lumière diffuse. Un tel dôme permet de ne pas être sujet à des changements de luminosité dus à des perturbations extérieures ponctuelles qui fausserait la mesure effectuée.

La caméra 22 placée sur le pare-brise 14 et dirigée vers l'extérieur permet d'obtenir une image vidéo, qui peut permettre la récupération d'une multitude de données, comme par exemple la luminosité, l'état du trafic, etc.

Sur la figure 1 est aussi représenté un moyen de réglage manuel 26 pour le conducteur du véhicule. Ce moyen de réglage manuel 26 est avantageusement placé à proximité du conducteur, par exemple ici à proximité du volant 12. Le moyen de réglage manuel 26 représenté sur la figure 1 comprend une molette rotative 28 de réglage manuel de la luminosité et un interrupteur 30, la molette rotative 28 entourant l'interrupteur 30 qui se présente ici sous la forme d'un bouton poussoir.

La figure 2 représente de façon schématique le système de commande selon l'invention. Le système de commande représenté comprend des moyens 32 d'évaluation de la luminosité, des moyens 34 de détermination d'une consigne de luminosité, le moyen de réglage manuel 26, et l'afficheur 36. La figure 2 représente aussi les interactions avec le conducteur 38.

Les moyens 32 d'évaluation de la luminosité comprennent par exemple le premier capteur de luminosité extérieure 18, le deuxième capteur de luminosité extérieure 19, le capteur de luminosité intérieure 20, le capteur de luminosité 50 mesurant la luminosité affichée par l'afficheur 36 et la caméra 22 décrits en référence à la figure 1. Suivant le mode de réalisation, les moyens 32 d'évaluation de la luminosité sont en outre reliés à des moyens fournissant l'une ou plusieurs des types de données suivantes :

- absence/présence de pluie, par exemple grâce à un capteur du type pluie-lumière-température (RLT, pour *Rain Light Temperature* en anglais),
- géo-localisation, par exemple à l'aide d'un système de géo-localisation tel que le système GPS (pour *Global Positioning System* en anglais)
- horaire, par exemple à l'aide d'une horloge interne ou pour plus de précision, une horloge synchronisée par un système tel que le GPS,
- conditions météorologiques, par exemple par le capteur RLT, ou par récupération de données météorologiques par voie de communication externe, par exemple grâce à l'Internet,
- images vidéo, par exemple par la caméra 22 vers l'avant du véhicule,
- vitesse du véhicule, par exemple par le système de mesure de vitesse intégré classique ou grâce au système GPS.

Ces données sont fournies par des moyens tels que par exemple des capteurs, systèmes de mesure internes ou externes, etc., tels que ceux précédemment indiqués à titre d'exemple, qui sont regroupés sur la figure 2 sous la référence 40. Cette liste de données n'est pas limitative et le système est apte à récupérer d'autres types de données utiles pour l'évaluation de la luminosité extérieure à l'avant du véhicule et au-delà de l'image 16 affichée par l'afficheur 36.

À l'aide de toutes ou partie de ces données, les moyens 32 d'évaluation de la luminosité évaluent la luminosité à l'avant du véhicule et au-delà de l'image 16 affichée. Les différentes données collectées sont transmises aux moyens 34 de détermination de la consigne de luminosité à afficher. Les moyens 34 de détermination comprennent un microcontrôleur 42 qui récupère les données provenant des différents moyens 32 d'évaluation de la luminosité (capteurs, instruments de mesure, etc.). Les données sont ensuite traitées par un programme du microcontrôleur 42 pour en déduire une consigne de luminosité à transmettre à l'afficheur 36.

Pour améliorer la détermination de la consigne de luminosité, les moyens 34 de détermination comprennent une base de données 44 de scène d'illumination, comprenant des données représentatives de situations d'illumination. Le système fait ainsi une comparaison de la situation courante évaluée par les moyens 32 d'évaluation de la luminosité avec des situations existantes préenregistrées dans la base de données 44. Le système peut aussi enregistrer des nouvelles situations par apprentissage. La base de données 44 peut aussi comprendre des données géo-localisées, comprenant par exemple des situations que rencontre le véhicule dans le cadre du trajet usuel et régulier du conducteur.

A titre d'exemple, le système de commande peut permettre l'anticipation des situations d'illumination suivantes grâce à la combinaison des données de la liste précédentes et des capteurs de luminosité précédents :

- Les données de géo-localisation indiquent le passage futur d'un véhicule sous un tunnel, ou la sortie future de ce tunnel, et connaissant la vitesse du véhicule, le système sait à quel moment le véhicule passera sous le tunnel et détermine la consigne de luminosité à transmettre à l'afficheur 36 au moment de ce passage. L'arrivée du tunnel est confirmée/infirmée par le capteur de luminosité externe 18 et/ou la caméra 22,

  - Les données météorologiques (capteur RLT et données externes) indiquent la présence de neige, la valeur de la consigne de luminosité est augmentée pour augmenter la lisibilité de l'affichage de l'image 16 sur l'afficheur 36,
  - etc.

Une fois la consigne de luminosité déterminée par les moyens 34 de détermination, ladite consigne de luminosité est transmise à l'afficheur 36 qui modifie donc la luminosité de l'image affichée 16 en conséquence. L'image 16 est alors visible par le conducteur 38 avec la luminosité automatiquement déterminée par les moyens 34 de détermination. Cette interaction est représentée par la flèche pointillée 46.

Néanmoins, cette luminosité automatiquement déterminée peut ne pas correspondre totalement à une situation confortable pour le conducteur 38. Pour améliorer le confort du conducteur 38 du véhicule, le système comprend donc le moyen de réglage manuel 26 de la luminosité décrit précédemment, que peut actionner le conducteur 38. Cet action de réglage est représentée par la flèche pointillée 48. Ce moyen de réglage manuel 26 comprend deux éléments pour deux fonctions différentes.

La molette rotative 28 permet d'effectuer un réglage fin de la luminosité autour de la valeur de consigne de luminosité initialement déterminée par les moyens 34 de détermination. Ainsi, la consigne manuelle ne se substitue pas à la détermination automatique de la consigne de luminosité. Ce réglage permet simplement au conducteur 38 d'adapter légèrement la luminosité en fonction de sa réponse visuelle personnelle et de son confort, qui peut être variable au fil du temps, de jour en jour, ou en fonction par exemple de la fatigue visuelle du conducteur 38. Autrement dit, ce réglage fin manuel permet de décaler le point de confort de la consigne de luminosité. Ce décalage est enregistré et appliqué à toutes les valeurs de consignes de luminosité rencontrées au cours du temps, afin de conserver une adéquation avec la réponse visuelle du conducteur 38, jusqu'à ce que le conducteur 38 change à nouveau le réglage manuel ou que ce réglage soit remis à zéro pour toute autre raison.

L'interrupteur 30, ici sous la forme d'un bouton poussoir, permet au conducteur 38 de passer d'un mode normal de fonctionnement de l'afficheur 36 à un mode discret.

Le mode normal de fonctionnement de l'afficheur 36 présente une luminosité normale, correspondant à la consigne de luminosité déterminée par les moyens 34 de détermination en fonction de la luminosité évaluée par les moyens 32 d'évaluation (en tenant compte éventuellement du réglage manuel fin décrit précédemment). Sur l'afficheur 36 est affichée une image 16 comprenant une multitude d'informations, tel que la vitesse, des informations GPS, le kilométrage, etc., qui sont intégrées par le constructeur du véhicule et qui peuvent éventuellement faire l'objet de paramétrages divers par le conducteur 38.

Le mode discret de fonctionnement de l'afficheur 36 présente une luminosité plus faible que le mode normal, et/ou un nombre d'informations affiché sur l'image 16 réduit, comme par exemple seulement la vitesse et les messages d'urgence. Cela permet au conducteur 38, s'il est gêné par l'image 16 ou s'il n'éprouve pas le besoin de voir affichée cette image 16, de désactiver une grande partie des fonctionnalités de l'afficheur 36 de façon rapide tout en conservant les informations les plus importantes.

**Revendications**

1. Afficheur (36) tête haute d'un véhicule comprenant un système de commande de luminosité, ledit afficheur (36) étant configuré pour afficher une image (16), ledit système comprenant des moyens (32) d'évaluation de la luminosité reliés à des moyens (34) de détermination d'une consigne de luminosité à destination de l'afficheur (36), lesdits moyens (32) d'évaluation de la luminosité étant aptes à évaluer la luminosité extérieure vers l'avant du véhicule et au-delà de l'image (16) affichée sur ledit afficheur (36), lesdits moyens (34) de détermination étant aptes à déterminer la consigne de luminosité en fonction de la luminosité extérieure évaluée et à la transmettre à l'afficheur (36), les moyens (32) d'évaluation de la luminosité comprenant au moins un capteur de luminosité extérieure (18) apte à évaluer la luminosité vers l'avant du véhicule et au-delà de l'image (16) affichée sur l'afficheur (36), **caractérisé en ce que** le dit capteur de luminosité extérieure (18) est disposé de sorte à être dans le même champ de vision que l'afficheur (36) et à recevoir la lumière incidente dans un cône dont l'intersection avec le plan de l'image (16) recouvre sensiblement toute cette image (16).

2. Afficheur (36) tête haute d'un véhicule comprenant un système de commande de luminosité selon la revendication 1 **caractérisé en ce que** les moyens (32) d'évaluation de la luminosité comprennent :

   - le capteur de luminosité extérieure (18), mesurant la luminosité à l'extérieur du véhicule,
   - un capteur de luminosité (20) mesurant la luminosité à l'intérieur du véhicule, et/ou
   - un capteur de luminosité (50) mesurant la luminosité de l'image (16) affichée par l'afficheur (36).

3. Afficheur (36) tête haute d'un véhicule comprenant un système de commande de luminosité selon l'une des revendications précédentes, **caractérisé en ce que** les moyens (32) d'évaluation de la luminosité sont reliés à des moyens fournissant l'un ou plusieurs des types de données suivantes :

   - absence/présence de pluie,
   - géo-localisation,
   - horaire,
   - conditions météorologiques,
   - images vidéo,
   - vitesse du véhicule.

4. Afficheur (36) tête haute d'un véhicule comprenant un système de commande de luminosité selon l'une des revendications précédentes, **caractérisé en ce qu'**il comprend une base de données (44) de scène d'illumination, ladite base comprenant des données représentatives de différentes situations d'illumination.

5. Afficheur (36) tête haute d'un véhicule comprenant un système de commande de luminosité selon l'une des revendications précédentes, **caractérisé en ce qu'**il comprend un moyen de réglage manuel (26) de la luminosité apte à être contrôlé par un conducteur (38) du véhicule, et configuré pour permettre un réglage fin par le conducteur (38) de la consigne de luminosité transmise à l'afficheur (36) autour de la valeur de consigne de luminosité initiale déterminée par les moyens (34) de détermination.

6. Afficheur (36) tête haute d'un véhicule comprenant un système de commande de luminosité selon la revendication précédente, **caractérisé en ce que** le moyen de réglage manuel (26) comprend un interrupteur (30) configuré pour, à la suite de l'activation de celui-ci par le conducteur (38), réduire significativement la valeur de consigne de luminosité et/ou pour réduire le nombre d'informations affichées sur l'image (16) de l'afficheur (36) et, à la suite de la désactivation de celui-ci, rétablir la valeur de consigne de luminosité initiale et le nombre d'informations affichées sur l'image (16) de l'afficheur (36) initial.

7. Procédé de commande de luminosité d'un afficheur (36) tête haute d'un véhicule, ledit afficheur (36) étant configuré pour afficher une image (16), ledit système comprenant des moyens (32) d'évaluation de la luminosité reliés à des moyens (34) de détermination d'une consigne de luminosité à destination de l'afficheur (36), ledit procédé comprenant une étape d'évaluation de la luminosité extérieure vers l'avant du véhicule et au-delà de l'image affichée sur ledit afficheur (36), une étape de détermination d'une consigne de luminosité à l'afficheur (36) en fonction de la luminosité extérieure évaluée à l'étape d'évaluation, et une étape de transmission de ladite consigne audit afficheur (36) et en ce que les moyens (32) d'évaluation de la luminosité comprennent au moins un capteur de luminosité extérieure (18) apte à évaluer la luminosité vers l'avant du véhicule et au-delà de l'image (16) affichée sur l'afficheur (36), **caractérisé en ce que** le dit capteur de luminosité extérieure (18) est disposé de sorte à être dans le même champ de vision que l'afficheur (36) et à recevoir la lumière incidente dans un cône dont l'intersection avec le plan de l'image (16) recouvre sensiblement toute cette image (16)..

**Patentansprüche**

1. Headup-Anzeige (36) eines Fahrzeugs, die ein System zur Steuerung der Helligkeit beinhaltet, wobei die Anzeige (36) dazu konfiguriert ist, ein Bild (16) anzuzeigen, wobei das System Mittel (32) zur Bewertung der Helligkeit beinhaltet, die mit Mitteln (34) zur Bestimmung eines Helligkeitssollwerts für die Anzeige (36) verbunden sind, wobei die Mittel (32) zur Bewertung der Helligkeit dazu fähig sind, die Außenhelligkeit vor dem Fahrzeug und jenseits des auf der Anzeige (36) angezeigten Bildes (16) zu bewerten, wobei die Bestimmungsmittel (34) dazu fähig sind, den Helligkeitssollwert in Abhängigkeit von der bewerteten Außenhelligkeit zu bestimmen und ihn an die Anzeige (36) zu übertragen, wobei die Mittel (32) zur Bewertung der Helligkeit mindestens einen Außenhelligkeitssensor (18) beinhalten, der dazu fähig ist, die Helligkeit vor dem Fahrzeug und jenseits des auf der Anzeige (36) angezeigten Bildes (16) zu bewerten, **dadurch gekennzeichnet, dass** der Außenhelligkeitssensor (18) so angeordnet ist, dass er sich in demselben Sichtfeld wie die Anzeige (36) befindet und das Licht aufnimmt, das in einem Kegel einfällt, dessen Überschneidung mit der Ebene des Bildes (16) dieses gesamte Bild (16) im Wesentlichen abdeckt.

2. Headup-Anzeige (36) eines Fahrzeugs, die ein System zur Steuerung der Helligkeit nach Anspruch 1 beinhaltet, **dadurch gekennzeichnet, dass** die Mittel (32) zur Bewertung der Helligkeit Folgendes beinhalten:

   - den Außenhelligkeitssensor (18), der die Helligkeit außerhalb des Fahrzeugs misst,
   - einen Helligkeitssensor (20), der die Helligkeit innerhalb des Fahrzeugs misst, und/oder
   - einen Helligkeitssensor (50), der die Helligkeit des durch die Anzeige (36) angezeigten Bildes (16) misst.

3. Headup-Anzeige (36) eines Fahrzeugs, die ein System zur Steuerung der Helligkeit nach einem der vorhergehenden Ansprüche beinhaltet, **dadurch gekennzeichnet, dass** die Mittel (32) zur Bewertung der Helligkeit mit Mitteln verbunden sind, die einen oder mehrere der folgenden Datentypen bereitstellen:

   - Abwesenheit/Auftreten von Regen,
   - Geolokalisierung,
   - Uhrzeit,
   - Wetterbedingungen,
   - Videobilder,
   - Geschwindigkeit des Fahrzeugs.

4. Headup-Anzeige (36) eines Fahrzeugs, die ein System zur Steuerung der Helligkeit nach einem der vorhergehenden Ansprüche beinhaltet, **dadurch gekennzeichnet, dass** sie eine Beleuchtungsszenen-Datenbank (44) beinhaltet, wobei die Datenbank Daten beinhaltet, die für unterschiedliche Beleuchtungssituationen repräsentativ sind.

5. Headup-Anzeige (36) eines Fahrzeugs, die ein System zur Steuerung der Helligkeit nach einem der vorhergehenden Ansprüche beinhaltet, **dadurch gekennzeichnet, dass** sie ein Mittel zur manuellen Einstellung (26) der Helligkeit beinhaltet, das dazu fähig ist, von einem Fahrer (38) des Fahrzeugs gesteuert zu werden, und dazu konfiguriert ist, eine Feineinstellung, durch den Fahrer (38), des Helligkeitssollwerts, der an die Anzeige (36) übertragen wird, rund um den durch die Bestimmungsmittel (34) bestimmten Anfangshelligkeitssollwert zu gestatten.

6. Headup-Anzeige (36) eines Fahrzeugs, die ein System zur Steuerung der Helligkeit nach dem vorhergehenden Anspruch beinhaltet, **dadurch gekennzeichnet, dass** das Mittel zur manuellen Einstellung (26) einen Schalter (30) beinhaltet, der dazu konfiguriert ist, im Anschluss an die Aktivierung desselben durch den Fahrer (38) den Helligkeitssollwert deutlich zu reduzieren und/oder die Anzahl von auf dem Bild (16) der Anzeige (36) angezeigten Informationen zu reduzieren und im Anschluss an die Deaktivierung desselben den Anfangshelligkeitssollwert und die Anzahl von anfänglich auf dem Bild (16) der Anzeige (36) angezeigten Informationen wiederherzustellen.

7. Verfahren zur Steuerung der Helligkeit einer Headup-Anzeige (36) eines Fahrzeugs, wobei die Anzeige (36) dazu konfiguriert ist, ein Bild (16) anzuzeigen, wobei das System Mittel (32) zur Bewertung der Helligkeit beinhaltet, die mit Mitteln (34) zur Bestimmung eines Helligkeitssollwerts für die Anzeige (36) verbunden sind, wobei das Verfahren einen Schritt der Bewertung der Außenhelligkeit vor dem Fahrzeug und jenseits des auf der Anzeige (36) angezeigten Bildes, einen Schritt der Bestimmung eines Helligkeitssollwerts für die Anzeige (36) in Abhängigkeit von der während des Bewertungsschritts bewerteten Außenhelligkeit und einen Schritt der Übertragung des Sollwerts an die Anzeige (36) beinhaltet, und dass die Mittel (32) zur Bewertung der Helligkeit mindestens einen Außenhelligkeitssensor (18) beinhalten, der dazu fähig ist, die Helligkeit vor dem Fahrzeug und jenseits des auf der Anzeige (36) angezeigten Bildes (16) zu bewerten, **dadurch gekennzeichnet, dass** der Außenhelligkeitssensor (18) so angeordnet ist, dass er sich in demselben Sichtfeld wie die Anzeige (36) befindet und das Licht aufnimmt, das in einem Kegel einfällt, dessen Überschneidung mit der Ebene des Bildes (16) dieses gesamte Bild (16) im Wesentlichen abdeckt.

## Claims

1. Head-up display (36) of a vehicle comprising a brightness control system,

   - said display (36) being configured to display an image (16), said system comprising means (32) for assessing brightness linked to means (34) for determining a brightness setpoint intended for the display (36), said brightness assessment means (32) being capable of assessing the outside brightness towards the front of the vehicle and beyond the image (16) displayed on said display (36), said determination means (34) being capable of determining the brightness setpoint as a function of the assessed outside brightness and of transmitting it to the display (36), the brightness assessment means (32) comprising at least one outside brightness sensor (18) capable of assessing the brightness towards the front of the vehicle and beyond the image (16) displayed on the display (36), **characterized in that** said outside brightness sensor (18) is arranged so as to be within the same field of view as the display (36) and of receiving the incident light in a cone whose intersection with the plane of the image (16) covers substantially all of this image (16).

2. Head-up display (36) of a vehicle comprising a brightness control system according to Claim 1, **characterized in that** the brightness assessment means (32) comprise:

   - the outside brightness sensor (18), measuring the brightness outside the vehicle,
   - a brightness sensor (20) measuring the brightness inside the vehicle, and/or
   - a brightness sensor (50) measuring the brightness of the image (16) displayed by the display (36).

3. Head-up display (36) of a vehicle comprising a brightness control system according to one of the preceding claims, **characterized in that** the brightness assessment means (32) are linked to means supplying one or more of the following types of data:

   - absence/presence of rain,
   - geolocation,
   - timetable,
   - weather conditions,
   - video images,
   - speed of the vehicle.

4. Head-up display (36) of a vehicle comprising a brightness control system according to one of the preceding claims, **characterized in that** it comprises an illumination scene database (44), said base comprising data representative of different illumination situations.

5. Head-up display (36) of a vehicle comprising a brightness control system according to one of the preceding claims, **characterized in that** it comprises a manual brightness adjustment means (26) that can be controlled by a driver (38) of the vehicle, and configured to allow a fine adjustment by the driver (38) of the brightness setpoint transmitted to the display (36) around the initial brightness setpoint value determined by the determination means (34).

6. Head-up display (36) of a vehicle comprising a brightness control system according to the preceding claim, **characterized in that** the manual adjustment means (26) comprises a switch (30) configured to, following the activation thereof by the driver (38), significantly reduce the brightness setpoint value and/or the quantity of information displayed on the image (16) of the display (36) and, following the deactivation thereof, restore the initial brightness setpoint value and the quantity of information displayed on the image (16) of the initial display (36).

7. Method for controlling brightness of a head-up display (36) of a vehicle, said display (36) being configured to display an image (16), said system comprising means (32) for assessing brightness linked to means (34) for determining a brightness setpoint intended for the display (36), said method comprising a step of assessment of the outside brightness towards the front of the vehicle and beyond the image displayed on said display (36), a step of determination of a brightness setpoint on the display (36) as a function of the outside brightness assessed in the assessment step, and a step of transmission of said setpoint to said display (36), and in that the brightness assessment means (32) comprise at least one outside brightness sensor (18) capable of assessing the brightness towards the front of the vehicle and beyond the image (16) displayed on the display (36), **characterized in that** said outside brightness sensor (18) is arranged so as to be within the same field of view as the display (36) and receive the incident light in a cone whose intersection with the plane of the image (16) covers substantially all this image (16).

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20120123833
- US 2012092315 A1